# EUROPEAN PATENT SPECIFICATION

(11) **EP 3 731 131 B1**
(45) Date of publication and mention of the grant of the patent: **21.08.2024**
(21) Application number: 19170768.6
(22) Date of filing: 24.04.2019
(51) Int. Cl.: G06V 10/94, G06V 40/60, G06V 20/68

(54) **APPARATUS FOR ASSISTED COOKING**
VORRICHTUNG ZUM UNTERSTÜTZTEN KOCHEN
APPAREIL DE CUISSON ASSISTÉE

(43) Date of publication of application: 28.10.2020
(73) Proprietor: BSH Hausgeräte GmbH, 81739 München (DE)
(72) Inventor: Karolewski, Rafal, 03-291 Warszawa (PL)

(56) References cited:
- EP-A1- 1 903 509
- EP-A1- 3 355 026
- CN-A- 109 349 913
- ES-A1- 2 760 848
- JP-A- 2010 191 745
- US-A1- 2016 048 720
- US-A1- 2017 193 322

## Description

The present invention relates to an apparatus for assisting a user when cooking. A related method is also provided.

Document US2010231506A1 discloses an invention which is generally in the field of control of appliances in the home, and in their networking and connectivity also with audio systems and internet sources and the integration of these elements in a connected manner. Preferred apparatus generally employs a video projection system and one or more TV cameras. Embodiments of the invention may be used to enhance the social interaction and enjoyment of persons in the kitchen and reduce the work of food preparation. The invention may be used in many rooms of the house, and contribute to the wellbeing of seniors and others living therein.

Document US6559882B1 discloses a domestic cooking or defrosting appliance including a heating region and a camera for obtaining images of food cooking or defrosting within the heating region, wherein the camera outputs video signals to a processor that drives a display means associated with the appliance and/or controls the cooking or defrosting operation of the appliance. The display means is conveniently situated on the appliance to show an easily-viewable image of the food obtained by the camera. The camera is sensitive to infra-red radiation and outputs video signals representative of the heat of the food. The processor can therefore convert infra-red information received from the camera into visible information to create a display on the display means representative of the infra-red information. Such a display is preferably color-coded in accordance with the local temperature of the food. The appliance is adapted for interaction with a communications network such as the Internet by the addition of a substantially self-contained discrete communications module connectable to the communications network, the communications module including display means and command entry means that optionally interact with the appliance.

Document US2016048720A1 discloses a container for providing an enclosure for a food item including a plurality of grading marks and a docking station to dock an electronic device. Yet further, the system includes a processor configured to take one or more pictures of the food item using the electronic device, transmit the one or more pictures to a cloud, receive recommended recipes for the food item and display the recommended recipes.

Document US2017193322A1 discloses a method for optical character recognition of external segmented displays using a camera connected to a reading device and a data reading application on the reading device.

Document EP1903509A1 discloses a biometric authentication device, which identifies characteristics of the body from captured images of the body and performs individual authentication. The device guides a user, at the time of verification, to the image capture state at the time of registration of biometric characteristic data. At the time of registration of biometric characteristic data, body image capture state data is extracted from an image captured by an image capture unit and is registered in a storage unit, and at the time of verification the registered image capture state data is read from the storage unit and is compared with image capture state data extracted at the time of verification, and guidance of the body is provided. Alternatively, an outline of the body at the time of registration, taken from image capture state data at the time of registration, is displayed. EP1903509A1 prevents verification failures occurring even when the person is the individual in question, and the time required for verification can be shortened, contributing to improve the reliability of biometric authentication.

Document DE102016100949A1 discloses a household appliance with a user interface, which is configured to detect a user input, and comprising a control device which is configured to control the household appliance as a function of the user input detected via the user interface, wherein the user interface comprises a projection unit which is configured to project an image onto a surface outside the household appliance, wherein the user interface comprises a detection unit, which is configured to detect an interaction of a user with the image on the surface, and wherein the control device is configured to monitor the interaction detected by the detection unit for the occurrence of a predefined interaction and to control the household appliance according to the occurrence of the predefined interaction. The invention further relates to a method for controlling the household appliance, comprising the following steps: projecting an image onto a surface outside the household appliance; detecting an interaction of a user with the monitoring the detected interaction for the occurrence of a predefined interaction; and controlling the household appliance according to the occurrence of the predefined interaction.

It is the object of the present invention to provide an improved apparatus and a relating method for assisting a user when cooking, in particular, to facilitate the preparation of dishes by less experienced users. The invention solves this problem by means of the subject-matter of the independent claims. Embodiments of the invention are described by the dependent claims, the following description and the figures. The invention is set out in the independent claims.

In accordance with the present invention, there is provided an interaction apparatus for assisted cooking, comprising a camera for recording an image of a foodstuff. A scale is placed in a field of view of the camera. A processor for processing the image is provided, wherein the processor is adapted to determine a type of the foodstuff based on the image, to find a suitable recipe which comprises the type of foodstuff, to retrieve data for assisting the user while cooking according to the found recipe and to present the retrieved data to the user.

Recipes usually consist of two groups of information; ingredients and a method of preparing dishes or processing the foodstuff. The present invention provides the user with the apparatus for assisted cooking ready to support the user in the process while cooking. The apparatus is able to recognize the type of the foodstuff. Said recognition is based on recording an image by the camera. Information about the recognized type of the foodstuff is utilized to find the recipe, which comprises said type of foodstuff, to support, especially less experienced users in the process of selecting dishes to prepare and then guiding the user to achieve a predetermined result.

The processor of the apparatus is further adapted to determine the weight of the foodstuff and to adapt an amount of ingredients which need to be added to the foodstuff according to the found recipe based on the weight of the foodstuff.

One of the most important things in the process of cooking food, preparing dishes or processing foods is adding suitable ingredients in a suitable order and a suitable quantity defined by the recipe. Quantities of ingredients may be specified by mass. The present invention provides the apparatus for assisted cooking having the processor, which is adapted to determine the weight of the foodstuff and on this basis to adapt the amount of other ingredients which need to be added to cook the dishes, determined based on the found recipe. Furthermore the apparatus can present to a user a list of dishes, that can be prepared from the recognized type of the foodstuff and the user can select a preferred dish for assisted cooking.

The processor is further adapted to determine the weight of the foodstuff by recognizing a display of a scale within the image and by recognizing a content displayed on the display of the scale to determine the weight of the foodstuff, wherein the content is preferably recognized using OCR.

A recipe usually consists of mass determined ingredients, therefore kitchens are usually equipped with a scale. Most of them are electronic scales with an LCD display for presenting visually the weighing result to the user. The apparatus recognizes the content displayed on the display of the scale to determine the weight of the foodstuff. The content is recognized using OCR based on the image recorded by the camera. The advantage of this is that the user can use a popular, typical electronic scale, usually available in the kitchen.

Advantageously the apparatus comprises a communication module, which is preferably adapted to receive data about a weight of the foodstuff. The data about a weight of the foodstuff may be for example send from the scale to the communication module via a Bluetooth connection. Advantageously the communication module is adapted to send a query to a database of foodstuffs comprising the type of the foodstuff and a request to receive the density of the foodstuff and to receive the density of the foodstuff and the processor is adapted to determine the volume of the foodstuff and to verify the correctness of the determination of the type of foodstuff using the determined weight, the received density and the volume. The positive effect of that is that the apparatus has two steps of the control process useful to achieve high result in the correct recognition of the type of the foodstuff.

Furthermore, a projector is provided being adapted for projecting guiding lines for helping the user to position a scale in the field of view of the camera such that its display can be recognized. This results in the positive effect that the user receives hints regarding the position of the scale in the field of view of the camera.

Another preferred embodiment comprises a scanner for recording a 3D image of the foodstuff for determining the volume of the foodstuff. Based on the recorded 3D image of the foodstuff its volume can be determined to verify the correctness of the recognized type of the foodstuff.

A method includes steps of positioning a foodstuff in the field of view of the camera, taking an image of the foodstuff, determining a type of the foodstuff based on the image, using the determined type of foodstuff for finding a suitable recipe which comprises the type of foodstuff, retrieving data for assisting the user while cooking according to the found recipe and presenting the retrieved data to the user.

The method comprises the further steps of determining the weight of the foodstuff and adapting an amount of ingredients, which need to be added to the foodstuff according to the found recipe based on the weight of the foodstuff.

The method further comprises steps of positioning a scale in the field of view of the camera, wherein the step of positioning the foodstuff in the field of view of the camera comprises the step of positioning the foodstuff on the scale, and determining the weight of the foodstuff using the scale.

The method comprises a step in which the content on the display of the scale is recognized based on the image of the scale to determine the weight of the foodstuff. The content is recognized based on the image of the display recorded by the camera using OCR.

In another embodiment, the method comprises a step in which determining the weight of the foodstuff is performed using a scale that comprises a communication module, which is adapted to transmit the weight to the user interaction apparatus. The communication may be realized by a wireless connection.

In some embodiments the method comprises the further steps of: sending a query to a database of foodstuffs comprising the type of the foodstuff and a request to receive the density of the foodstuff, processing the image for determining the volume of the foodstuff, receiving the density of the foodstuff, and using the determined weight, the received density and the volume to verify the correctness of the determination of the type of foodstuff.

The method comprises the further steps of: interacting with the user to help the user to properly position the scale and the foodstuff in the field of view of the camera, wherein a projector projects guiding lines defining the area for positioning the scale and the foodstuff and displaying on a user interface information helping the user to determine the quality of the position of the scale and the foodstuff.

The described method may be implemented in software. Therefore, the invention comprises a computer program product comprising instructions which, when the program is executed by a computer, cause the computer to carry out the steps of the method according to the invention.

The invention has been described with regard to a user interaction apparatus and a method. If not stated otherwise, features of one claim category may be likewise applied to all other claim categories and vice versa.

Further benefits and advantages of embodiments of the present invention will become apparent after a careful reading of the detailed description with appropriate reference to the accompanying drawings.

In the drawings:
Fig. 1 is a perspective view of a kitchen arrangement comprising the apparatus in accordance with a preferred embodiment of the present invention.
Fig. 2 is a block view of the apparatus in accordance with a preferred embodiment of the present invention.

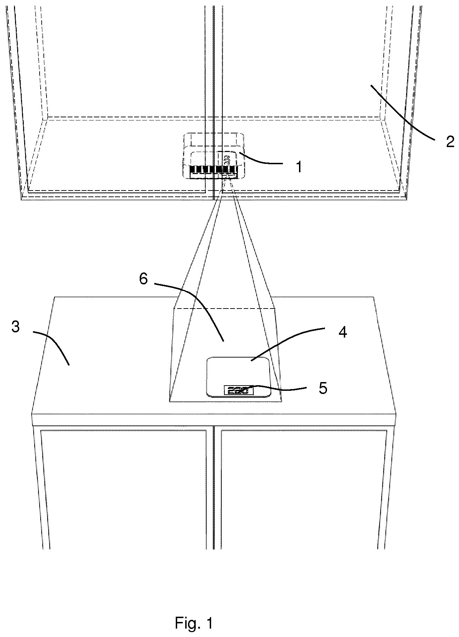

Reference is made to Fig.1, which is a perspective view of the kitchen arrangement with an apparatus 1 for assisted cooking. The apparatus 1 is preferably used in a household, and the most preferably in a kitchen of the household arranged. The apparatus 1 is mounted under a kitchen cabinet 2 and above a countertop 3, which is usually utilized to prepare a food by the user. The apparatus 1 is equipped with a camera 8 (not shown in this figure) for recording an image of a portion of the countertop 3 with objects presented on the countertop 3 in the field of view 6 of the camera 8. Furthermore, the apparatus 1 comprises a projector 11 (not shown in this figure) for presenting information for the user by displaying it on the countertop 3 in the field of view 6, and for achieving the interaction between the user and apparatus 1 using in that method the camera 8 to grab input information to the apparatus 1. The apparatus 1 assists and supports a user, especially less experienced users in the process of achieving predetermined result, namely a dish, based on the type of the foodstuff as recognized by the processor 9 (not shown in this figure). The processor 9 is adapted to determine a type of the foodstuff based on an image recorder by the camera 8, to find a suitable recipe, which comprises the type of foodstuff, to retrieve data for assisting the user while cooking according to the found recipe and to present the retrieved data to the user. The processor 9 is adapted to recognize the weight of the foodstuff based on the image of the content of a LCD display 5 of the kitchen scale 4 recorded by the camera 8 by using OCR. In addition, the weight information may be received via a communication module 10 from the kitchen scale 4, if the kitchen scale 4 is provided with such a functionality. Furthermore, the apparatus 1 comprises a scanner 7 (not shown on this figure) for recording 3D image of the foodstuff for determining the volume of the foodstuff. A step of the method of assisted cooking is positioning a foodstuff in the field of view 6 of the camera 8 and then the camera takes an image of the foodstuff in the next step. The processor 9 determines a type of the foodstuff based on the image. Afterwards, the processor 9 uses the determined type of foodstuff for finding a suitable recipe, which comprises the type of foodstuff, retrieves data for assisting the user while cooking according to the found recipe and presents the retrieved data to the user by using the projector 11. In the next step, the user can choose a suitable recipe. Based on the determined weight of the foodstuff the processor 9 adapts an amount of ingredients, which need to be added to the foodstuff according to the found recipe based on the weight of the foodstuff. This information is presented to the user by the projector 11. The correctness of the determination of the type of the food by the processor 9 is verified by sending a query to a database of foodstuffs comprising the type of the foodstuff and a request to receive the density of the foodstuff, processing the 3D image for determining the volume of the foodstuff, receiving the density of the foodstuff, and using the determined weight, the received density and the volume to verify the correctness of the determination of the type of foodstuff. Additionally, the apparatus 1 interacts with the user to help the user to properly position the scale 4 and the foodstuff on the countertop 3 in the field of view 6 of the camera 8by displaying with the projector 11 on the countertop 3 guiding lines defining the area for positioning the scale and the foodstuff and displaying on a user interface information helping the user to determine the quality of the position of the scale 4 and the foodstuff.

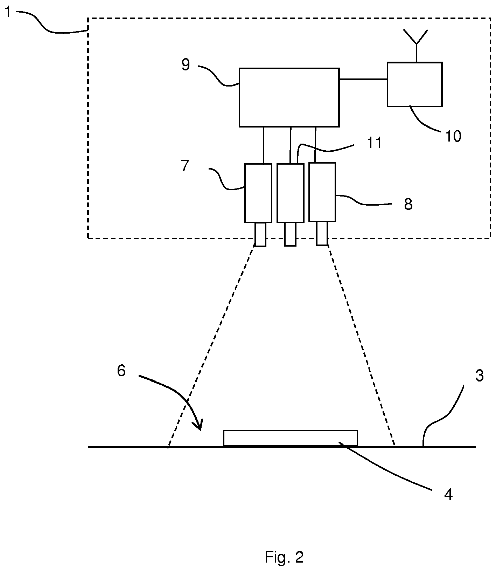

Reference is made to Fig. 2, which is a block view of the apparatus 1 in accordance with a preferred embodiment of the present invention. The apparatus 1 is mounted under a kitchen cabinet 2 and above a countertop 3. The apparatus 1 comprises a camera 8 for recording an image of a foodstuff placed in a field of view 6 of the camera 8 and a projector for presenting on the countertop 3 information for a user. Furthermore, the apparatus comprises a communication module 10 and a scanner 7 for recording a 3D image of the foodstuff for determining the volume of the foodstuff, and a processor 9 for processing the image. The processor is adapted to determine a type of the foodstuff based on the image, to find a suitable recipe, which comprises the type of foodstuff, to retrieve data for assisting the user while cooking according to the found recipe and to present the retrieved data to the user. The processor is also adapted to determine the weight of the foodstuff. This is achieved by recognizing the value displayed on a display 5 of a kitchen scale 4, which is disposed in the field of view 6 of the camera 8, wherein the content of the display 5 is recognized based on the image of the scale using OCR. A step of the method of assisted cooking is positioning a foodstuff in the field of view 6 of the camera 8, then the camera takes an image of the foodstuff in the next step. The processor 9 determines a type of the foodstuff based on the image, uses the determined type of foodstuff for finding a suitable recipe, which comprises the type of foodstuff, and retrieves data for assisting the user while cooking according to the found recipe. The retrieved data is presented to the user by using the projector 11. Then the user can choose a suitable recipe. Based on the determined weight of the foodstuff the processor 9 adapts an amount of ingredients, which need to be added to the foodstuff according to the found recipe based on the weight of the foodstuff. This information is presented to the user by the projector 11. The correctness of the determination of the type of the food by the processor 9 is verified by sending a query to a database of foodstuffs comprising the type of the foodstuff and a request to receive the density of the foodstuff, processing the 3D image for determining the volume of the foodstuff, receiving the density of the foodstuff, and using the determined weight, the received density and the volume to verify the correctness of the determination of the type of foodstuff. Additionally the apparatus 1 interacts with the user to help the user to properly position the scale 4 and the foodstuff in the field of view 6 of the camera 8, wherein the projector 11 projects guiding lines defining the area for positioning the scale and the foodstuff and displays on a user interface information helping the user to determine the quality of the position of the scale and the foodstuff.

### List of significant signs

1 user interaction apparatus, apparatus
2 kitchen cabinet
3 countertop
4 scale
5 display
6 field of view
7 scanner
8 camera
9 processor
10 communication module
11 projector

## Claims

1. A user interaction apparatus (1) for assisting a user while cooking, comprising a projector, a user interface, a camera and a processor, wherein:
- the user interaction apparatus is adapted to interact with the user to help the user to properly position a scale and a foodstuff in a field of view of the camera, wherein the step of positioning the foodstuff in the field of view of the camera comprises a step of positioning the foodstuff on the scale;
- the projector is adapted to project guiding lines defining an area for positioning the scale and the foodstuff;
- the user interface is adapted to display information helping the user to determine a quality of a position of the scale and the foodstuff;
- the camera is adapted to take an image depicting the foodstuff and the scale; and
- the processor is adapted to:
a. determine a type of the foodstuff based on the image,
b. determine a weight of the foodstuff by recognizing a content displayed on a display of the scale within the image using OCR;
c. based on the type of the foodstuff, find a recipe which comprises the type of the foodstuff;
d. retrieve data about an amount of other ingredients which need to be added to the foodstuff according to the recipe for assisting the user while cooking according to the recipe;
e. present the retrieved data to the user; and
f. for each ingredient which needs to be added to the foodstuff according to the recipe, adapt its amount based on the weight of the foodstuff.

2. The apparatus according to claim 1, **characterized in that** the apparatus (1) comprises a communication module (10), which is adapted to receive data about a weight of the foodstuff.

3. The apparatus according to claim 2, **characterized in that**
- the communication module is adapted to send a query to a database of foodstuffs comprising the type of the foodstuff and a request to receive the density of the foodstuff and to receive the density of the foodstuff and
- the processor (9) is adapted to determine the volume of the foodstuff and to verify the correctness of the determination of the type of foodstuff using the determined weight, the received density and the volume.

4. The apparatus according to any of the preceding claims **characterized in that** it comprises a scanner (7) for recording a 3D image of the foodstuff for determining the volume of the foodstuff.

5. A method for assisting a user while cooking with a user interaction apparatus comprising a projector (11), a user interface, a camera (8) and a processor (9), the method comprising:
- positioning a scale (4) in a field of view of the camera (8),
- positioning a foodstuff in the field of view of the camera (8), wherein the step of positioning the foodstuff in the field of view of the camera (8) comprises a step of positioning the foodstuff on the scale (4),
- interacting with the user to help the user to properly position the scale (4) and the foodstuff in the field of view of the camera (8), wherein the projector (11) projects guiding lines defining an area for positioning the scale and the foodstuff, and displaying on the user interface information helping the user to determine a quality of a position of the scale and the foodstuff,
- taking by the camera (8) an image depicting the foodstuff and the scale,
- determining by the processor (9) a type of the foodstuff based on the image,
- determining by the processor (9) a weight of the foodstuff by recognizing a content displayed on a display (5) of the scale (4) within the image using OCR,
- based on the type of the foodstuff, finding by the processor (9) a recipe which comprises the type of the foodstuff,
- retrieving by the processor (9) data about an amount of other ingredients which need to be added to the foodstuff according to the recipe for assisting the user while cooking according to the recipe,
- presenting by the processor the retrieved data to the user, and
- for each ingredient which needs to be added to the foodstuff according to the recipe, adapting by the processor its amount based on the weight of the foodstuff.

6. The method according to the preceding claims 5, **characterized in that** it comprises the further steps of:
- sending a query to a database of foodstuffs comprising the type of the foodstuff and a request to receive the density of the foodstuff,
- processing the image for determining the volume of the foodstuff,
- receiving the density of the foodstuff, and
- using the determined weight, the received density and the volume to verify the correctness of the determination of the type of foodstuff.

7. A computer program product comprising instructions which, when the program is executed by a computer, cause the computer to carry out the steps of the method according to one of the claims 5 to 6.

## Patentansprüche

1. Vorrichtung (1) für die Benutzerinteraktion zum Unterstützen eines Benutzers beim Kochen, die einen Projektor, eine Benutzerschnittstelle, eine Kamera und einen Prozessor umfasst, wobei:
- die Vorrichtung für die Benutzerinteraktion so ausgelegt ist, dass sie mit dem Benutzer interagiert und ihn so dabei unterstützt, eine Waage und ein Lebensmittel im Sichtfeld der Kamera richtig zu positionieren, wobei das Positionieren des Lebensmittels im Sichtfeld der Kamera ein Positionieren des Lebensmittels auf der Waage umfasst,
- der Projektor so ausgelegt ist, dass er Führungslinien projiziert, die einen Bereich für das Positionieren der Waage und des Lebensmittels definieren,
- die Benutzerschnittstelle so ausgelegt ist, dass sie Informationen anzeigt, die den Benutzer dabei unterstützen, eine Qualität einer Position der Waage und des Lebensmittels zu bestimmen,
- die Kamera so ausgelegt ist, dass sie ein Bild aufnimmt, welches das Lebensmittel und die Waage zeigt, und
- der Prozessor so ausgelegt ist, dass er:
a. auf der Grundlage des Bildes eine Art des Lebensmittels bestimmt,
b. mithilfe von OCR durch Erkennen eines auf einer Anzeige an der Waage in dem Bild angezeigten Inhalts ein Gewicht des Lebensmittels bestimmt,
c. auf der Grundlage der Art des Lebensmittels ein Rezept sucht, das die Art Lebensmittel umfasst,
d. zur Unterstützung des Benutzers beim rezeptgemäßen Kochen Daten zu einer Menge anderer Zutaten abruft, die dem Rezept entsprechend zu dem Lebensmittel hinzugefügt werden müssen,
e. dem Benutzer die abgerufenen Daten präsentiert und
f. für jede rezeptgemäß zu dem Lebensmittel hinzuzufügende Zutat deren Menge auf der Grundlage des Gewichts des Lebensmittels anpasst.

2. Vorrichtung nach Anspruch 1, **dadurch gekennzeichnet, dass** die Vorrichtung (1) ein Kommunikationsmodul (10) umfasst, das so ausgelegt ist, dass es Daten zu einem Gewicht des Lebensmittels empfängt.

3. Vorrichtung nach Anspruch 2, **dadurch gekennzeichnet, dass**:
- das Kommunikationsmodul so ausgelegt ist, dass es eine Anfrage an eine Lebensmitteldatenbank sendet, die die Art des Lebensmittels umfasst, und die Dichte des Lebensmittels abfragt und die Dichte des Lebensmittels empfängt, und
- der Prozessor (9) so ausgelegt ist, dass er das Volumen des Lebensmittels bestimmt und anhand des bestimmten Gewichts, der empfangenen Dichte und des Volumens die Richtigkeit der Bestimmung der Art des Lebensmittels überprüft.

4. Vorrichtung nach einem der vorhergehenden Ansprüche, **dadurch gekennzeichnet, dass** sie einen Scanner (7) zum Aufzeichnen eines 3D-Bildes von dem Lebensmittel zum Bestimmen des Volumens des Lebensmittels umfasst.

5. Verfahren zum Unterstützen eines Benutzers beim Kochen mit einer Vorrichtung für die Benutzerinteraktion, die einen Projektor (11), eine Benutzerschnittstelle, eine Kamera (8) und einen Prozessor (9) umfasst, wobei das Verfahren Folgendes umfasst:
- Positionieren einer Waage (4) in einem Sichtfeld der Kamera (8),
- Positionieren eines Lebensmittels im Sichtfeld der Kamera (8), wobei das Positionieren des Lebensmittels im Sichtfeld der Kamera (8) ein Positionieren des Lebensmittels auf der Waage (4) umfasst,
- Interagieren mit dem Benutzer, um ihn beim richtigen Positionieren der Waage (4) und des Lebensmittels im Sichtfeld der Kamera (8) zu unterstützen, wobei der Projektor (11) Führungslinien projiziert, die einen Bereich zum Positionieren der Waage und des Lebensmittels definieren, und Anzeigen von Informationen auf der Benutzerschnittstelle, die den Benutzer dabei unterstützen, eine Qualität einer Position der Waage und des Lebensmittels zu bestimmen,
- Aufnehmen eines Bildes mit der Kamera (8), welches das Lebensmittel und die Waage zeigt,
- Bestimmen einer Art des Lebensmittels durch den Prozessor (9) auf der Grundlage des Bildes,
- Bestimmen eines Gewichts des Lebensmittels durch den Prozessor (9) durch Erkennen eines auf einer Anzeige (5) an der Waage (4) in dem Bild angezeigten Inhalts mithilfe von OCR,
- auf der Grundlage der Art Lebensmittel Suchen nach einem Rezept, das die Art Lebensmittel umfasst, durch den Prozessor (9),
- zur Unterstützung des Benutzers beim rezeptgemäßen Kochen Abrufen von Daten zu einer Menge anderer Zutaten, die rezeptgemäß zu dem Lebensmittel hinzugefügt werden müssen, durch den Prozessor (9),
- Präsentieren der abgerufenen Daten für den Benutzer durch den Prozessor und
- für jede Zutat, die rezeptgemäß zu dem Lebensmittel hinzugefügt werden muss, Anpassen von deren Menge auf der Grundlage des Gewichts des Lebensmittels durch den Prozessor.

6. Verfahren nach dem vorhergehenden Anspruch 5, **dadurch gekennzeichnet, dass** es die folgenden weiteren Schritte umfasst:
- Senden einer Anfrage an eine Lebensmitteldatenbank, die die Art des Lebensmittels umfasst, und Abfragen der Dichte des Lebensmittels,
- Verarbeiten des Bildes zum Bestimmen des Volumens des Lebensmittels,
- Empfangen der Dichte des Lebensmittels und
- Benutzen des bestimmten Gewichts, der empfangenen Dichte und des Volumens zum Überprüfen der Richtigkeit der Bestimmung der Art des Lebensmittels.

7. Computerprogrammprodukt, das Anweisungen umfasst, die, wenn das Programm von einem Computer ausgeführt wird, diesen dazu veranlassen, die Schritte des Verfahrens nach einem der Ansprüche 5 bis 6 durchzuführen.

## Revendications

1. Appareil d'interaction avec un utilisateur (1) pour assister un utilisateur lorsqu'il cuisine, comprenant un projecteur, une interface utilisateur, une caméra et un processeur, dans lequel :
- l'appareil d'interaction avec un utilisateur est adapté pour interagir avec l'utilisateur afin d'aider l'utilisateur à positionner correctement une balance et un produit alimentaire dans un champ de vision de la caméra, l'étape de positionnement du produit alimentaire dans le champ de vision de la caméra comprenant une étape de positionnement du produit alimentaire sur la balance,
- le projecteur est adapté pour projeter des lignes de guidage définissant une zone pour positionner la balance et le produit alimentaire,
- l'interface utilisateur est adaptée pour afficher des informations aidant l'utilisateur à déterminer une qualité d'une position de la balance et du produit alimentaire,
- la caméra est adaptée pour prendre une image représentant le produit alimentaire et la balance, et
- le processeur est adapté pour :
a) déterminer un type du produit alimentaire sur la base de l'image,
b) déterminer un poids du produit alimentaire en identifiant un contenu affiché sur un affichage de la balance dans l'image par OCR,
c) sur la base du type du produit alimentaire, trouver une recette qui comprend le type du produit alimentaire,
d) extraire des données sur une quantité d'autres ingrédients qu'il est nécessaire d'ajouter au produit alimentaire selon la recette pour aider l'utilisateur à cuisiner selon la recette,
e) présenter les données extraites à l'utilisateur, et
f) pour chaque ingrédient qu'il est nécessaire d'ajouter au produit alimentaire selon la recette, adapter sa quantité en fonction du poids du produit alimentaire.

2. Appareil selon la revendication 1, **caractérisé en ce que** l'appareil (1) comprend un module de communication (10), qui est adapté pour recevoir des données relatives au poids du produit alimentaire.

3. Appareil selon la revendication 2, **caractérisé en ce que** :
- le module de communication est adapté pour envoyer une requête à une base de données de produits alimentaires comprenant le type du produit alimentaire et une demande pour recevoir la densité du produit alimentaire, et pour recevoir la densité du produit alimentaire, et
- le processeur (9) est adapté pour déterminer le volume du produit alimentaire et pour vérifier l'exactitude de la détermination du type du produit alimentaire sur la base du poids déterminé, de la densité reçue et du volume.

4. Appareil selon l'une quelconque des revendications précédentes, **caractérisé en ce qu'**il comprend un scanner (7) pour enregistrer une image 3D du produit alimentaire afin de déterminer le volume du produit alimentaire.

5. Procédé pour assister un utilisateur lorsqu'il cuisine avec un appareil d'interaction avec un utilisateur comprenant un projecteur (11), une interface utilisateur, une caméra (8) et un processeur (9), le procédé comprenant :
- le positionnement d'une balance (4) dans un champ de vision de la caméra (8),
- le positionnement d'un produit alimentaire dans le champ de vision de la caméra (8), l'étape de positionnement du produit alimentaire dans le champ de vision de la caméra (8) comprenant une étape de positionnement du produit alimentaire sur la balance (4),
- l'interaction avec l'utilisateur pour aider l'utilisateur à positionner correctement la balance (4) et le produit alimentaire dans le champ de vision de la caméra (8), dans lequel le projecteur (11) projette des lignes de guidage définissant une zone pour positionner la balance et le produit alimentaire, et l'affichage sur l'interface utilisateur d'informations aidant l'utilisateur à déterminer une qualité d'une position de la balance et du produit alimentaire,
- la prise par la caméra (8) d'une image représentant le produit alimentaire et la balance,
- la détermination par le processeur (9) d'un type du produit alimentaire sur la base de l'image,
- la détermination par le processeur (9) d'un poids du produit alimentaire en identifiant un contenu affiché sur un affichage (5) de la balance (4) dans l'image par OCR,
- sur la base du type de produit alimentaire, la recherche par le processeur (9) d'une recette qui comprend le type du produit alimentaire,
- l'extraction, par le processeur (9), de données sur une quantité d'autres ingrédients qu'il est nécessaire d'ajouter au produit alimentaire selon la recette pour assister l'utilisateur à cuisiner selon la recette,
- la présentation par le processeur des données extraites à l'utilisateur, et
- pour chaque ingrédient qu'il est nécessaire d'ajouter au produit alimentaire selon la recette, l'adaptation par le processeur de sa quantité en fonction du poids du produit alimentaire.

6. Procédé selon la revendication 5, **caractérisé en ce qu'**il comprend les étapes supplémentaires suivantes :
- l'envoi d'une requête à une base de données de produits alimentaires comprenant le type du produit alimentaire et d'une demande pour recevoir la densité du produit alimentaire,
- le traitement de l'image pour déterminer le volume du produit alimentaire,
- la réception de la densité du produit alimentaire, et
- l'utilisation du poids déterminé, de la densité reçue et du volume pour vérifier l'exactitude de la détermination du type du produit alimentaire.

7. Produit de programme informatique comprenant des instructions qui, lorsque le programme est exécuté par un ordinateur, amènent l'ordinateur à mettre en oeuvre les étapes du procédé selon l'une quelconque des revendications 5 à 6.
